# EUROPEAN PATENT APPLICATION

(11) **EP 4 408 039 A1**
(43) Date of publication of application: **31.07.2024**
(21) Application number: 24151875.2
(22) Date of filing: 15.01.2024
(51) Int. Cl.: H04W 4/40, H04W 4/44, H04W 4/46, H04W 4/38, G08G 1/00

(54) **IMPROVED SIGNALLING OF PERCEIVED OBJECTS IN AN INTELLIGENT TRANSPORT SYSTEM**

(30) Priority: 30.01.2023 GB 202301323
(71) Applicant: Canon Kabushiki Kaisha, Tokyo 146-8501 (JP)
(72) Inventor: LE HOUEROU, Brice, 35690 ACIGNE (FR); MORVAN, Isabelle, 35135 CHANTEPIE (FR); NASSOR, Eric, 35235 THORIGNE-FOUILLARD (FR)
(74) Representative: Santarelli

(57) **Abstract**

At least one embodiment of a method of communication in an intelligent transport system, ITS, the method comprising, at an ITS station, ITS-S, identifying a change of a reporting policy of a previously reported object, or of a previously reported perception region, objects or perception regions to be reported being reported in collective perception messages, CPMs, and comprising transmitting a CPM comprising at least one item of information to indicate the identified change of the reporting policy.

## Description

### FIELD OF THE DISCLOSURE

The present disclosure relates generally to Intelligent Transport Systems (ITSs) and more specifically to Cooperative Intelligent Transport Systems (C-ITSs).

### BACKGROUND OF THE DISCLOSURE

Cooperative Intelligent Transport Systems (C-ITSs) is an emerging technology for future transportation management that aims at improving road safety, traffic efficiency, and driver experience.

Intelligent Transport Systems (ITS), as defined by the European Telecommunications Standards Institute (ETSI), include various types of communication such as:
- communications between vehicles (e.g., car-to-car), and
- communications between vehicles and stationary stations (e.g., car-to-infrastructure).

C-ITSs are not restricted to road transport as such. More generally, C-ITS may be defined as the use of information and communication technologies (ICT) for rail, water, and air transport, including navigation systems. Such various types of C-ITS generally rely on radio services for communication and use dedicated technologies.

Such C-ITSs are subject to standards, specified for each country and/or territory where C-ITSs are implemented. Today, in Europe, the European Telecommunications Standards Institute is in charge of the elaboration of the specifications forming the standards to which C-ITSs are subjected.

Cooperation within C-ITSs is achieved by exchange of messages, referred as to ITS messages, between ITS stations (denoted ITS-Ss). The ITS-Ss may be vehicles, Road Side Units (RSUs), Vulnerable Road Users (VRUs) carrying an ITS equipment (for instance included in a smartphone, a GPS device, a smart watch, or in a cyclist equipment), or any other entities or infrastructure equipped with an ITS equipment, as well as central subsystems (back-end systems and traffic management centers).

As observed above, C-ITSs may support various types of communications, for instance between vehicles (vehicle-to-vehicle or "V2V"), referring to all kinds of road users, e.g., car-to-car, or between vehicles and stationary stations such as vehicle-to-infrastructure or "V2I", and infrastructure-to-vehicle or "I2V", e.g., car-to-infrastructure.

Such exchanges of messages may be performed via a wireless network, referred to as "V2X" (for "vehicle" to any kind of devices) networks, examples of which may include 3GPP LTE- Advanced Pro, 3GPP 5G, or IEEE 802.11p technology (3GPP, LTE, and IEEE are Registered Trade Marks).

Exemplary ITS messages include Collective Perception Messages (CPMs), Cooperative Awareness Messages (CAMs), and Decentralized Environmental Notification Messages (DENMs). An ITS-S sending an ITS message is named an "originating" ITS-S and an ITS-S receiving an ITS message is named a "receiving" ITS-S.

It is recalled here that ETSI TS 103 324 (V0.0.29 of May 2022) standard defines the Collective Perception Service, that may be used by an ITS-S having an on-board sensor system to detect objects in its vicinity and to transmit, using broadcast CPMs, description information (e.g., dynamics such as a position and/or kinematic information) thereof. The CPMs are generally periodically sent with a period varying from 100 milliseconds to one second depending, for example, on the speed of the objects sensed by the originating ITS-S. In order to optimize the use of the network bandwidth, ITS stations may apply inclusion rules. The inclusion rules permit to adapt the frequency of dissemination of the perceived objects and of the perception regions to the other ITS stations in the vicinity using CPMs. Those rules define different criteria and parameter values such as the speed of perceived objects and the priority between object classes to optimize the CPM size. For example, a perceived fast car may be reported up every 100 milliseconds while a perceived stopped car can have a sparser reporting such as 1 second. Likewise, a perceived pedestrian being considered as a Vulnerable Road User (VRU) has a higher priority in the inclusion rule than a perceived car, for safety reason. In addition, an ITS station may intentionally omit the inclusion of some perceived objects or perception regions due to network bandwidth limitation, message size limitation.

It is also to be noted that EN 302 637-2 (V1.4.1 of April 2019) standard defines the Cooperative Awareness Basic Service, that may be used by an ITS-S to transmit, using broadcast CAMs, its ego-vehicle dynamics (e.g., its position and speed).

It is also to be noted that EN 302 637-3 (V1.3.1 of April 2019) standard defines the Decentralized Environmental Notification Basic Service, that may be used by an originating ITS-S to send, using broadcast DENMs, notifications to other ITS-Ss, such as warnings or alerts. Such a message notifies of an event (e.g., a road hazard, driving environment information, traffic condition information, etc.) detected by the originating ITS-S.

Each ITS station has an environment model called a Local Dynamic Map (LDM) that is regularly updated with highly dynamic data to locate vehicles, pedestrians, bicycles, etc. in the vicinity of the ITS station. The LDM is updated using information from on-board sensors and completed with information from received ITS messages such as:
- awareness messages containing the ego-position and the speed of connected vehicles (CAM) or of connected Vulnerable Road Users (VAM) and
- collective perception messages (CPM) containing the perceived objects (e.g. vehicles, motorbikes, bicycles, or pedestrians) and the perception regions counting detected objects in an area from sensor-equipped ITS stations. CPMs improve the local perception ability (larger field of view, non-connected objects, etc.).

As mentioned above, the Collective Perception Service allows a sensor-equipped ITS station to share, on a periodic basis, its perceived objects (e.g., vehicles or pedestrians) and its perception regions (e.g. area with pedestrians) with other nearby ITS stations to improve their local environment perception using broadcast Collective Perception Messages (CPMs). The receiving ITS stations can then update their local environment model (LEM) with objects perceived by other ITS stations, and perform an association process with the data obtained from their on-board sensors to improve the reliability of the local environment model data.

While exchanging items of information regarding the objects and regions perceived by each ITS station enables an overall improvement in safety of the ITS users, it should be kept in mind that exchanging data between ITS stations and processing received data in each ITS station is resource intensive (e.g., bandwidth, processing, etc.). Therefore, there is a constant need to improve the sharing of knowledge between ITS stations while limiting the use of resources needed to transmit data.

### SUMMARY OF THE DISCLOSURE

The present disclosure has been devised to address one or more of the foregoing concerns.

According to a first aspect of the disclosure, there is provided a method of communication in an intelligent transport system, ITS, the method comprising, at an ITS station, ITS-S:
identifying a change of a reporting policy of a previously reported object, or of a previously reported perception region, objects or perception regions to be reported being reported in collective perception messages, CPMs, and
transmitting a CPM comprising at least one item of information to indicate the identified change of the reporting policy.

Accordingly, the method of the disclosure makes it possible to improve the sharing of knowledge between ITS stations while limiting the use of resources needed to transmit data. In particular, the method of the disclosure makes it possible for a receiving ITS-S to update its local dynamic map in a manner consistent with perception of objects by an originating ITS-S. Accordingly, a change of a reporting policy associated with an object may be provided by an originating ITS-S to a receiving ITS-S.

According to some embodiments, the identified change of the reporting policy is a change of a reporting policy of a previously reported object, and the change of the reporting policy results from reporting the previously reported object within a group of perceived objects in a corresponding container, after being previously reported as an individual object in a corresponding container.

Still according to some embodiments, the identified change of the reporting policy is a change of a reporting policy of a previously reported object, and the change of the reporting policy results from reporting the previously reported object as an individual object in a corresponding container, after being previously reported within a group of perceived objects in a corresponding container.

Still according to some embodiments, the at least one item of information further comprises a reference to the group of perceived objects.

Still according to some embodiments, the container corresponding to the group of perceived objects is a perceived object container or a perception region container.

Still according to some embodiments, the method further comprises applying at least one analysis rule for analyzing perceived objects and for determining whether a perceived object is to be reported as an individual perceived object or within a group of perceived objects, a change of a reporting policy of a previously reported object being identified as a function of the at least one analysis rule.

Still according to some embodiments, the at least one item of information further comprises an indication of the at least one analysis rule.

Still according to some embodiments, the change of the reporting policy results from changing the frequency of reporting the previously reported object or the previously reported perception region in consecutive CPMs to a new frequency of reporting, after being previously reported according to a previous frequency of reporting different from the new frequency of reporting, the at least one item of information further comprising the new frequency of reporting.

Still according to some embodiments, the change of the reporting policy results from suspending reporting the previously reported object or the previously reported perception region in CPMs.

Still according to some embodiments, the at least one item of information further comprises a relative or an absolute time at which or after which the change of the reporting policy is effective.

Still according to some embodiments, the at least one item of information further comprises a warning indicator to indicate whether the change of the reporting policy is intentional or unexpected.

Still according to some embodiments, the at least one item of information is included in a container individually describing a perceived object or a perception region.

Still according to some embodiments, the at least one item of information is included in a dedicated container in the CPM, the dedicated container being different from a perceived object container and from a perception region container.

Still according to some embodiments, the identified change of the reporting policy is a change of a reporting policy of a previously reported object, the method further comprising applying at least one inclusion rule for identifying perceived objects to be reported in a CPMs, the change of the reporting policy being identified as a function of the at least one inclusion rule.

Still according to some embodiments, the at least one item of information further comprises an indication of the at least one inclusion rule.

Still according to some embodiments, the method further comprises applying at least one perception rule for determining a safety indication associated with a perceived object, the change of the reporting policy being identified as a function of the at least one perception rule.

Still according to some embodiments, the at least one item of information further comprises an indication of the at least one perception rule.

Still according to some embodiments, the identified change of the reporting policy is a change of a reporting policy of a previously reported object and the previously reported object is no longer perceived.

Still according to some embodiments, the at least one item of information is obtained from a dedicated container of the received CPM, the dedicated container being different from a perceived object container and from a perception region container.

According to a second aspect of the disclosure, there is provided a method of communication in an intelligent transport system, ITS, the method comprising, at an ITS station, ITS-S:
receiving a collective perception message, CPM, comprising at least one item of information indicating a change of a reporting policy of an object or a perception region reported in a previous CPM and
updating an environment model of the ITS-S as a function of the at least one item of information.

Accordingly, the method of the disclosure makes it possible to improve the sharing of knowledge between ITS stations while limiting the use of resources needed to transmit data. In particular, the method of the disclosure makes it possible for a receiving ITS-S to update its local dynamic map in a manner consistent with perception of objects by an originating ITS-S. Accordingly, a change of a reporting policy associated with an object may be provided by an originating ITS-S to a receiving ITS-S.

According to some embodiments, the at least one item of information is obtained from a container of the received CPM, the container individually describing a perceived object or a perception region.

Still according to some embodiments, the at least one item of information is obtained from a dedicated container of the received CPM, the dedicated container being different from a perceived object container and from a perception region container.

According to other aspects of the disclosure, there is provided a device or an Intelligent Transport System, ITS, station, ITS-S configured for carrying out each of the steps of the method described above and a non-transitory computer-readable medium storing a program which, when executed by a microprocessor or computer system in an Intelligent Transport System station, ITS-S, causes the ITS-S to perform each step of the method described above.

These aspects of the disclosure have advantages similar to those mentioned above.

At least parts of the methods according to the disclosure may be computer implemented. Accordingly, the present disclosure may take the form of an entirely hardware embodiment, an entirely software embodiment (including firmware, resident software, micro-code, etc.) or an embodiment combining software and hardware aspects that may all generally be referred to herein as a "circuit", "module" or "system". Furthermore, the present disclosure may take the form of a computer program product embodied in any tangible medium of expression having computer usable program code embodied in the medium.

Since the solutions of the present disclosure can be implemented in software, the solutions of the present disclosure can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g., a microwave or RF signal.

### BRIEF DESCRIPTION OF THE DRAWINGS

Further advantages of the present disclosure will become apparent to those skilled in the art upon examination of the drawings and detailed description. Embodiments of the disclosure will now be described, by way of example only, and with reference to the following drawings, in which:
**Figure 1** illustrates an example of an ITS system in which some embodiments of the disclosure may be implemented;
**Figure 2** illustrates a schematic representation of the architecture of an ITS station transmitting CPMs in accordance with embodiments of the disclosure;
**Figure 3** illustrates, using flowcharts, an example of steps of a method according to embodiments of the present disclosure for generating and sending CPMs containing information about perceived objects and about estimated objects and for receiving and processing such CPMs;
**Figure 4** illustrates an example of a structure of a collective perception message, CPM, according to some embodiments of the present disclosure;
**Figure 5** illustrates an example of a structure of a collective perception message, CPM, extended with a notification message container according to some embodiments of the present disclosure;
**Figure 6** illustrates an example of a structure of a collective perception message, CPM, extended with notification message fields in the perceived object data structure and/or in the perception region data structure, according to some embodiments of the present disclosure;
**Figure 7** and **8** illustrate examples of use cases of some embodiments of the present disclosure, according to which an originating ITS-S performed some changes of a reporting policy of a perceived object in CPMs; and
**Figure 9** **is** a schematic representation of an example of a communication ITS-S device configured to implement some embodiments of the present disclosure.

### DETAILED DESCRIPTION OF THE DISCLOSURE

The names of the lists and elements (such as data elements) provided in the following description are only illustrative. Embodiments are not limited thereto and other names could be used.

The embodiments of the present disclosure are intended to be implemented in Intelligent Transportation Systems (ITS).

According to some embodiments, a CPM comprises an additional item of information to indicate a change in an object reporting policy (that may also be referred to as a reporting logic, reporting scheme, reporting rationale, or reporting rule). For example, such an item of information may indicate how and/or why the reporting is changed, e.g., why an object, for example a perceived object, is no longer reported or why the reporting frequency is changed. Still for the sake of illustration, such a change in object reporting policy may result from an inclusion rule (e.g., a rule applying to optimize the use of network bandwidth), from an analysis rule (e.g., when a perceived object is no longer reported as such but within a group to reduce the CPM size, as defined in TS 103 324, V0.0.53 standard), or from a perception rule (e.g., perception regarding hidden objects).

For example, a reporting policy associated with a perceived object may represent a set of one or more parameters according to which the perceived object is reported in consecutive CPMs. Without limitation, in particular in number or order, a first parameter of the set of parameters may indicate whether or not to report the perceived object. A second parameter of the set of parameters may indicate whether to report the perceived object individually or within a group of objects. A third parameter of the set of parameters may indicate the frequency according to which the perceived object is to be reported in consecutive CPMs. Changing the reporting policy may comprise changing one or more of the set of parameters of the reporting policy. When announcing a change of the reporting policy associated with an object, the ITS station may indicate, in a transmitted CPM, the relative or absolute time at which or after which the change of the reporting policy is effective, the changed parameters, and/or the reason and/or the rule behind the change. The change of the reporting policy may also comprise changing the classification associated with an object (for example, changing the class of an object from pedestrian to cyclist).

It is to be recalled that CPMs complying with the first version of CPMs (TS 103 324 standard) contain information about the current state of objects (e.g., actual position, speed, object classification, etc.) based on sensor measurements (only information about objects perceived by ITS stations are included in broadcast CPMs). Upon receiving such ITS messages, each ITS station carries out steps of a fusion process (also called association process) between data obtained from their own on-board sensors and data received within ITS messages, in order to update its environment model (also known as the local dynamic map, LDM). Since the process of tracking and associating tracked objects and regions in a local dynamic map is resource consuming, especially in dense area where there are many objects to keep track, the CPMs provide an almost-persistent object ID to track objects through successive generated CPMs.

The inventors have observed that this process is efficient only when the inclusion rules are not limiting the dissemination of all tracked objects. For example, CPM object inclusion rules (based on TS 103 324, V0.0.53 standard) may define that only objects perceived with a given level of confidence should be included in CPMs. Consequently, when an object becomes hidden, it is no longer reported in CPMs due to a low confidence level associated with the object measurement. Therefore, upon receiving such CPMs, an ITS station may determine that the object is no longer in the field of view of the originating ITS station and may remove this object from its local dynamic map. This results in a mismatch between LDMs of the originating ITS station and the receiving ITS station.

There are many reasons why an ITS station may stop reporting an object in CPMs, for example the object is hidden, it is not reported for redundancy mitigation purpose, it is not reported because it is considered without interest, its perception is lost, the object is reported within a group, the object is reported within a region, etc. The inventors have observed that without knowing the reason why an object is no longer reported in CPMs, a receiving ITS station may not react properly, for example it may lead the receiving ITS station to create an inconsistency in its LDM, which in turn may lead the receiving ITS station to take an unsafe decision.

According to some embodiments, an originating ITS station may inform receiving ITS stations that it performs an optimization in CPMs, for example by applying inclusion rules or by using VRU group or perception region to reduce the CPM size, and/or may inform ITS stations that it has lost the tracking of the object. By having knowledge of the reason of the absence of an object within a CPM, an ITS receiver may react properly.

Accordingly, when an originating ITS station decides to terminate reporting of an object or a perception region in CPMs, it may notify receiving ITS stations of this decision and preferably indicate the reason of this decision. For example, such a reason may be directed to a fusion of the same object perceived by several sensors, a migration in another object ID or region ID (e.g., VRU group, perception region, etc.), or loss of interest to report the object (e.g., it if is no longer on the road-traffic area). Under those conditions, a receiving ITS station may safely update its local dynamic map, for example by removing the concerned object or perception region.

Similarly, an inconsistency in the local dynamic map of a receiving ITS station may appear when an originating ITS station terminates the inclusion of an object or a perception region in CPM dissemination in the case according to which the object is still present but no longer perceived or the ITS station is no longer able to report it. In such a case, the originating ITS station may notify the other ITS stations of the absence of reporting of the object or perception region and indicate the reason why it is no longer reported in CPMs so that the receiving ITS stations may update their local dynamic map appropriately. Still for the sake of illustration, the reasons why an object or a perception region is no longer reported may be directed to abnormal conditions to perceive objects or regions such as defined in 'operational design domain' (ODD) of the perception system, to the fact that the object is now hidden, to a network congestion, to the fact that there are too many objects to report, to some failures or limitations of the system, etc.

Accordingly, a receiving ITS station may safely update its local dynamic map, for example by keeping the concerned object or perception region for a given retention time period even if it is no more reported.

In addition, a warning indicator may be used to enable the originating ITS station to inform the receiving ITS stations whether the change of the reporting policy of an object or a perception region is intentional and safe or is unexpected and may create some safety issue. Such a warning indicator may be transmitted in a notification part (e.g. a notification message container) of an ITS message. Accordingly, when the warning indicator is not set in an ITS message indicating the termination of reporting an object, a receiving ITS station receiving the ITS message may safely remove the concerned object from its local dynamic map. Conversely, when the warning indicator is set, a receiving ITS station receiving the ITS message may keep active the concerned object within its local dynamic map, using the latest perceived data. In such a case, the originating ITS station may transmit the latest perceived data (also known as `IastMeasurement') within the ITS message, for example in a notification part of the ITS message.

In some case of migration and fusion of objects or perception regions, an ITS message may also include information about an object or a perception region in which the object or perception region that is no longer reported is integrated. Such information may be stored in a notification part of the ITS message. In the case according to which a perceived object of the VRU type (indicated by classification field `vruSubclass') is reported in a VRU group (indicated by classification field 'groupSubclass'), the object identifier (indicated by objectID field) of the VRU group may be included in the ITS message (e.g., in a notification part of the ITS message) to indicate the end of reporting of the perceived object VRU. Likewise, in the case according to which a perceived object is migrated in a perception region, the region identifier (regionld) of this region may be included in the ITS message (e.g., in a notification part of the ITS message) to indicate the end of reporting of the perceived object. Regarding a fusion of the same object perceived by different sensors, an ITS message may comprise two notification parts to indicate the end of reporting of the objects perceived by the sensors and to indicate the new perceived object, having a new object identifier (objectld) and being perceived by a sensor of the 'fusion' type.

### ITS system and ITS station comprising a situation analysis module

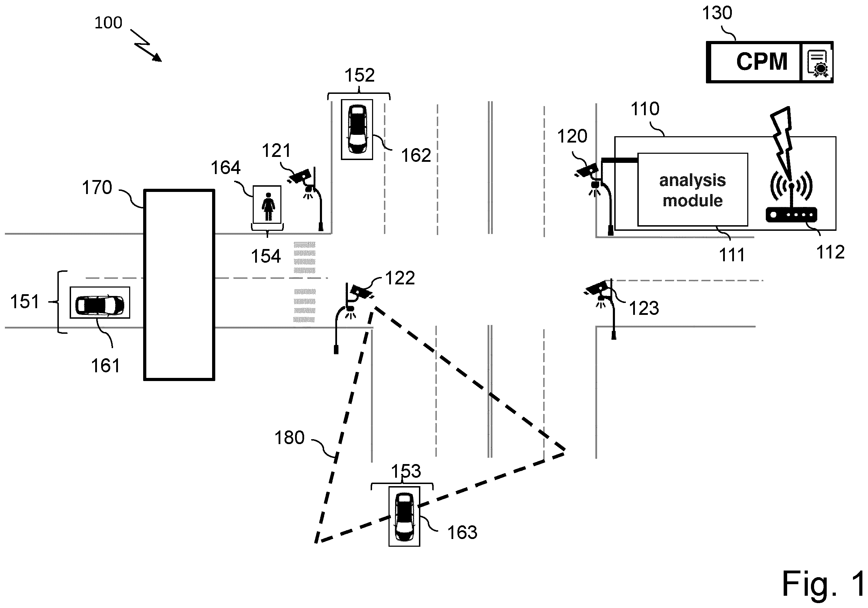

**Figure 1** illustrates an example of an ITS 100 in which some embodiments of the present disclosure may be implemented.

According to this example, an ITS station, that may generate and transmit CPMs such as CPM 130, is embedded within a road side unit, RSU, 110.

As illustrated, ITS 100 is implemented at an intersection and comprises stationary road side unit 110 and several entities that may carry or embed an ITS station (ITS-S) each, for transmitting and/or receiving ITS messages within the ITS. The several entities may be for example, vehicles 151, 152, 153 and a pedestrian 154.

Stationary road side unit 110 includes a set of sensors, such as image sensors, here video cameras 120, 121, 122, and 123 and an analytical module to analyze data provided by the sensors, such as analysis module (or situation analysis module) 111. Each of the video cameras 120, 121, 122, and 123 is configured to monitor or scan a portion of the area monitored by the RSU (here the road intersection), making it possible to acquire images and/or videos of the monitored area. Other sensors such as LIDARs (laser imaging detection and ranging devices) may also be used.

The sensors are connected to the analysis module (e.g., video cameras 120, 121, 122, and 123 are connected to analysis module 111) so that the analysis module may process the stream captured by the sensors/video cameras to analyze the traffic. The analysis module and the sensors may be separated from or embedded within the same physical road side unit. For example, the analysis module may be wire-connected to sensors that may be remote sensors (i.e. not embedded within the road side unit).

The processing of the data received from the sensors by the analysis module, e.g., analysis module 111, aims at detecting objects potentially present in the monitored area, referred to as "perceived objects" or "detected objects" hereinafter. Mechanisms to detect such objects are well known by one skilled in the art.

The situation analysis module is also configured to output a list of the perceived objects respectively associated with corresponding description information referred to as a "state vector". The state vector for a perceived object may include for instance parameters such as a position, a kinematic, temporal information, behavioral or object type classification information, etc.

The situation analysis module is also configured to output a list of the perception regions respectively associated with corresponding description information also referred to as a "state vector". The state vector for a perception region may include for instance parameters such as a count of detected objects in the region, a list of objects referenced by their object IDs, temporal information, behavioral or area geometric information, etc.

Therefore, the situation analysis module may identify, among the perceived objects, Vulnerable Road Users (VRUs) such as pedestrians and cyclists as well as motorcyclists and also persons with disabilities or reduced mobility and orientation. It may also identify objects such as trees, road construction / work equipment (e.g., road barriers), and so on.

A VRU may be considered as an ITS-S when carrying an ITS equipment, for example an ITS equipment included in a smartphone, a satnav system, a smart watch, or in a cyclist equipment.

According to the example illustrated in Figure 1, analysis module 111 may perceive the following objects when analyzing images of the monitored area:
- objects 161, 162, and 163, respectively corresponding to vehicles 151, 152, and 153, and
- object 164 corresponding to pedestrian 154 on the sidewalk.

In addition, the perceived objects may be classified. For example, if the perceived objects are ITS stations, they can be classified as vehicles, VRUs, RSUs, or any another ITS-S types. Such object type classification may be based for example on predetermined rules, provided during the setting up of road side unit 110, or more generally the ITS-S. It is observed that ETSI TR 103 562 V2.1.1 standard defines for instance the categories "unknown", "vehicle", "person", "animal", and "other". Of course, other categories, more specific, may be defined.

The analysis module may also have access to some information about the monitored area and about the road geometry such as the presence of fixed occlusion area 170 (e.g. the presence of a bridge). In particular, according to some embodiments of the disclosure, the analysis module is able to estimate the actual position of an object that was recently perceived by the sensors, if the object is occluded by a known element of the road topology (e.g. bridge) or by another object (e.g. a pedestrian behind a bus) or if the object has just left the sensor detection area (e.g. vehicle 153 is at the limit of the sensor detection area 180 corresponding to the camera sensor 122).

As illustrated in Figure 1, road side unit 110 further comprises a road side ITS-S, R-ITS-S, 112, for example as specified in the reference architecture of an ITS station defined in version V1.1.1 of the ETSI EN 302 665 standard.

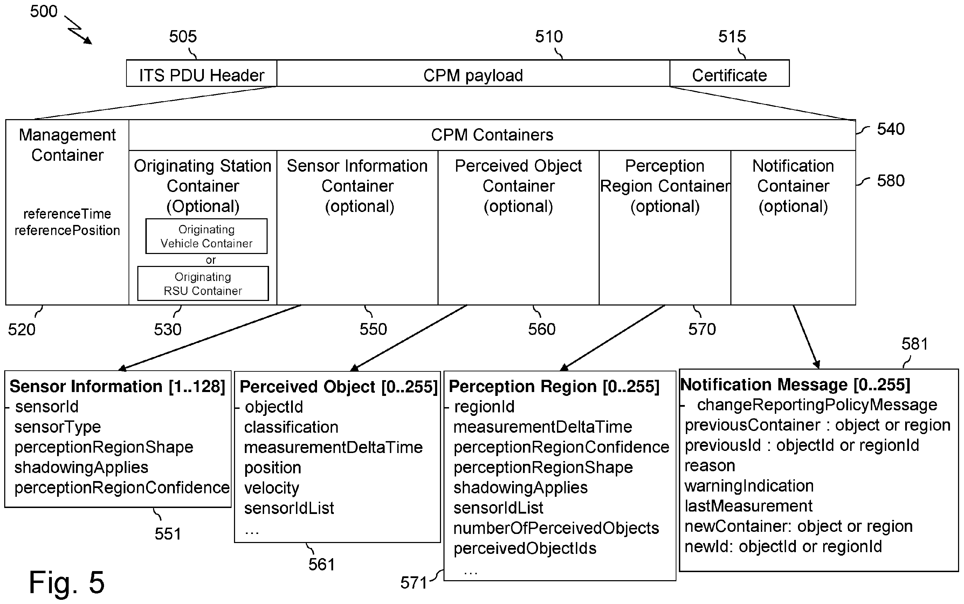

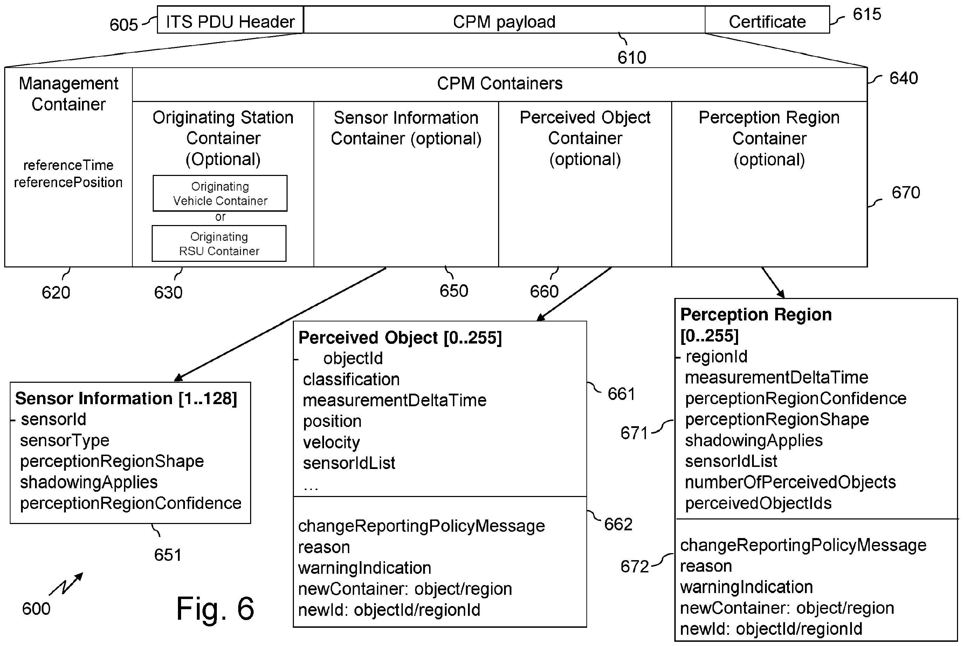

Thanks to roadside ITS-S 112, RSU 110 can share information relative to the perceived objects. Typically, RSU 110 can share such information with receiving ITS stations by sending ITS messages, particularly the so-called Collective Perception Messages, CPMs, e.g., CPM 130, for example as defined in documents ETSI TR 103 562 and ETSI TS 103 324, that are generally sent periodically. Examples of the format of a CPM according to some embodiments of the present disclosure are illustrated in Figure 5 and Figure 6.

More generally, any ITS-S in ITS 100 may share information about the objects and regions it perceives, by sending CPMs, as well as information on itself, by sending so-called Cooperative Awareness Messages, CAMs, for example as defined in document ETSI EN 302 637-2. CAMs may include a position, a kinematic (or dynamics), a unique station identifier, temporal information, behavioral or object type classification information, etc. Similarly, VRU Awareness Messages, VAMs, for example as defined in document ETSI TS 103 300-3, can be sent by VRU ITS-S to share their own position and kinematic or to share information corresponding to a group of VRUs (i.e., a VRU cluster).

The ITS messages are usually broadcast by their originating ITS-S, so that any other ITS-S can receive and exploit them.

All the messages exchanged over ITS 100 may help each ITS-S to have a good level of knowledge of its environment in terms of which objects are present, where and how they behave.

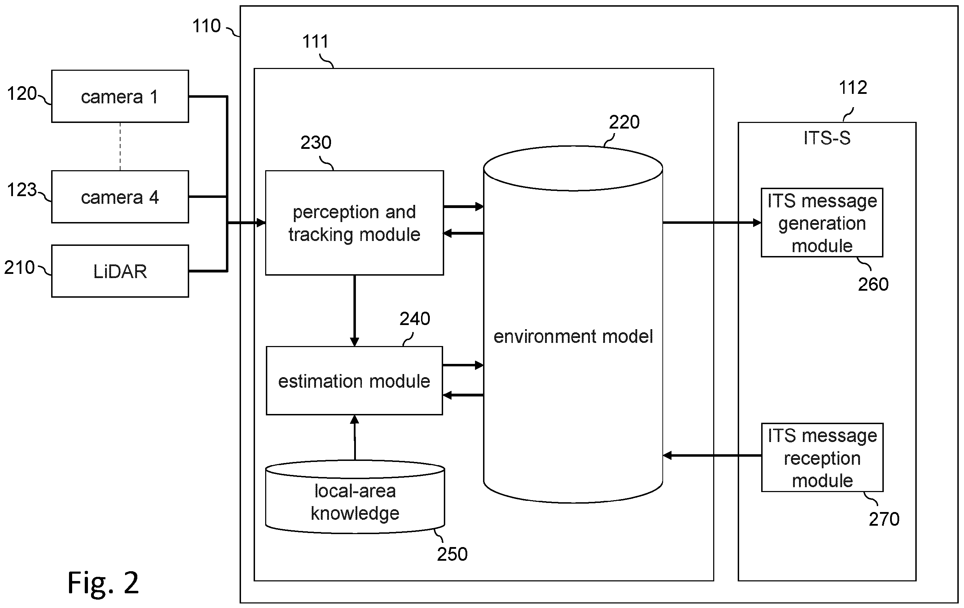

**Figure 2** illustrates a schematic representation of the architecture of an ITS station transmitting CPMs in accordance with embodiments of the disclosure

For the sake of illustration, it is considered here that the illustrated ITS station is the RSU referenced 110 in Figure 1. However, it may be another type of ITS-S-equipped entity.

As mentioned above by reference to Figure 1, analysis module 111 is connected to one or more sensors monitoring an area such as a road intersection. These sensors may include cameras 120 to 123 but also other sensors such as LIDAR 210 or mere radar devices.

The raw data acquired from these sensors may be processed by the perception and tracking module 230 of analysis module 111. According to some embodiments, the perception and tracking module 230 analyzes these raw data and uses sensor data fusion algorithms to combine or merge items of information directed to the same objects detected from the raw data acquired by several sensors, in order to perceive objects.

Consideration of similarity between objects perceived from raw data acquired from different sensors may be based on their object types, positions, kinetics/dynamics (speed, acceleration), trajectories, etc. A level of confidence may also be computed when scrutinizing the similarities of these items of information and the merging process may be affected by the level of confidence.

Items of information related to newly perceived objects and/or to already-tracked objects may be used to update the environment model 220 of the ITS-S. CAMs, VAMs, DENMs, and CPMs received from other ITS-Ss by the ITS message reception module 270 of ITS-S 112, conveying additional information, may also be used to update environment model 220.

The environment model (also known as the Local Dynamic Map) contains a list of the perceived objects. Each ITS-S has its own environment model 220.

In environment model 220, an object may be defined together with multiple items of information including, for example, all or some of the following:
- *objectId,* which is the identifier of the perceived (or detected) object,
- *timeOfMeasurement,* which represents the moment when the (last) measurement concerning the perceived object was made,
- *obectState,* which comprises a description of the object kinematic state and attitude. It may contain at least the object position and speed at the moment of measurement such as:
   ∘ *objectPosition,* which represents the position of the perceived object reference point. The object position may include the following information:
      ▪ *worldPosition,* which represents the absolute position of the object (e.g., using GPS position or UTM coordinates at the moment of measurement),
      ▪ *xCoordinate, yCoordinate, zCoordinate,* which represent the distance to the perceived object from the originating ITS-S's reference position to object reference point in x-direction, y-direction and z-direction at the moment of measurement in a predefined coordinate system, with a corresponding level of confidence. For instance, RSU 112 may use the World Geodetic System 84 (WGS84) as the predefined coordinate system,
   ∘ *objectVelocity,* which is the velocity vector of the perceived object in a polar or cartesian coordinate system..,
   ∘ additional optional information may be added into the environment model for completing the description of the object kinematic state and attitude such as the object acceleration, roll angle, pitch angle, yaw angle, roll rate, pitch rate, and yaw rate, roll acceleration, pitch acceleration, and yaw acceleration provided at the moment of measurement from the ITS-S's reference position at the moment of measurement in the pre-defined coordinate system,
- *objectDimensionX, objectDimensionY, objectDimensionZ* (optional), which represents the dimensions of the perceived object,
- *objectAge,* which is the age of the perceived object,
- *objectPerceptionQuality,* which indicates the overall information quality of the perceived object. The computation of the object confidence is based on a sensor's or fusion system's specific detection confidence, the binary detection success (i.e. the detection success of the object during the last measurement), and the object age,
- *sensorldList* (optional), which is a list of the sensor identifiers which provided the measurement data of the perceived object,
- *classification* (optional), which provides the classification of the perceived object, with a corresponding level of confidence,
   ∘ an ITS-S transmitting CPMs may regroup items of information of VRUs into a VRU Group. To report a VRU Group in a CPM, the classification structure associated with the object (i.e., with the VRU Group) may use the data structure *groupSubClass* of type *VruClusterlnformation.*
- *mapPosition,* (optional), which indicates the position of the perceived object mapped onto the intersection topology description transmitted in MAP messages.

The analysis module 111 can also determine perception regions as a part of the road area being monitored by at least one of the sensors 120,121,122, and 123 used to report the detected presence and count of perceived objects.

The environment model (or Local Dynamic Map) may also contain a list of determined perception regions. In environment model 220, a perception region may be defined with multiple items of information including, for example, all or some of the following:
- *regionld,* which is the identifier of the perception region,
- *timeOfMeasurement,* which represents the moment when the (last) measurement concerning the perceived object was made,
- area, which comprises a description of the region geometry and position.
- *numberOfObjects,* which indicates the number of objects detected in the region,
- *listOfObjects,* which is the list of the identifiers of the objects detected in the region, and
- *sensorIdList* (optional), which is a list of the identifiers of the sensor which provided the measurement data of the perceived object.

Environment model 220 contains the latest measurement data of perceived objects and according to some embodiments of the disclosure, it can also keep history of the previous measurement data. Depending on the memory size of the ITS-S and on the number of perceived objects, the retention time period of history data may vary (e.g., 2 minutes).

In environment model 220, a previously perceived object may have multiple items of information including, for example, all or some of the following:
- *previousContainer* (optional), which indicates the container where the object is previously reported (i.e., the perceived object container or the perception region container),
- *previousID* (optional), which indicates the identifier used to previously report the object,
- *reason,* which is the reason why the perceived object is removed,
- *warningIndication,* which indicates whether the object may be safely removed or should be kept for safety reason (e.g., occulted object),
- *lastMeasurement* (optional), which includes all (or most of) the items of information associated with the object when it has been perceived for the last time,
- *newContainer* (optional), which indicates the container where the object is now reported as new item (i.e., the perceived object container or the perception region container), and
- *newID* (optional), which indicates the new identifier used to report the object.

Environment model 220 is updated by the perception and tracking module 230, the estimation module 240, and the ITS message reception module 270. In particular, environment model 220 may be updated according to VAM and/or CAM received from other ITS-Ss. Accordingly, items of information associated with an estimated object may be updated with information received in a VAM or in a CAM, for example in a VAM or a CAM transmitted by the ITS-S associated with the estimated object. The ITS message generation module 260 of ITS-S 112 regularly generates CPMs containing items of information regarding the perceived objects and the estimated objects.

ITS message generation module 260 also generates notification message information over CPM by knowing the objects removed from the environment model (but kept under the retention time period) and also the perceived objects that are non-included in CPM due to inclusion rules.

ITS message generation module 260 indicates in ITS messages the cause of changing object reporting policy, for example the termination of reporting objects or perception regions, by using items of information generated by estimation module 240 used to update the environment model 220.

ITS message generation module 260 may indicate in ITS messages all or some of the following items of information obtained from environment model 220: *previousCoontainer, previousID, reason, warningIndication, lastMeasurement, newContainer,* and *newID.*

Alternatively, ITS message generation module 260 may indicate in ITS messages the cause of the termination of reporting objects when inclusion rules are used to exclude an object from CPMs.

### Generation and reception of CPMs with perceived objects and estimated objects

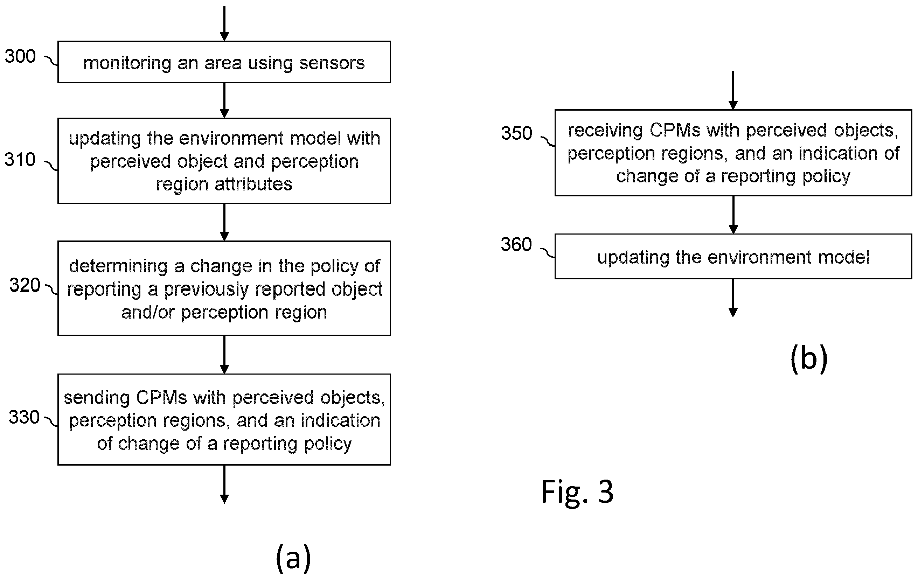

**Figure 3** illustrates, using flowcharts, an example of steps of a method according to embodiments of the present disclosure for generating and sending CPMs containing information about perceived objects and about estimated objects and for receiving and processing such CPMs.

As illustrated in Figure 3a, a method of communication in an ITS according to some embodiments of the present disclosure comprises, at an originating ITS-S, e.g. RSU 110 in Figure 1, a step of monitoring an area such as a road portion or a road intersection as illustrated in Figure 1 (step 300). To that end, the originating ITS-S uses its sensors (e.g. sensors 120 to 123, and 210 in Figure 2). Based on data obtained from these sensors, the perception and tracking module of the originating ITS-S (e.g., perception and tracking module 230 in Figure 2) identifies perceived objects and updates its environment model (step 310), e.g., environment model 220 in Figure 2. It may also update its environment model using items of information contained in ITS messages (CAMs, VAMs, CPMs, or DENMs) received from other ITS-Ss.

The estimation module of the originating ITS-S (e.g., estimation module 240 in Figure 2) continuously analyzes the objects of the environment model (e.g., environment model 220 in Figure 2) to determine change of the reporting policy of previously reported objects or reported perception regions (step 320). For the sake of illustration, a change of the reporting policy may correspond to the termination of reporting information associated with previously reported objects (for example to remove such objects if the corresponding level of confidence is too low), the no-longer reported objects being objects that are no longer perceived directly by on-board sensors of the ITS-S, but kept during a given retention time period.

In a case where a previously reported object should no longer be reported, the originating ITS-S sends a CPM containing an item of information about the concerned non-included object (step 330) in addition to the perceived objects, for example using the CPM format described with reference to Figure 5 or 6. Selection of the items of information associated with the previously reported object that should no longer be reported, that are to be transmitted within the CPM, may be done during this step.

For each object that should no longer be reported in CPMs, a notification part of the CPMs may comprise a *'changeReportingPolicyMessage'* field with the reason why these objects should no longer be reported, for example as stored in the environment model.

According to TS 103 324 standard, several inclusion rules may be used to exclude some perceived objects from CPMs, even if these perceived objects are present in the environment model with high confidence levels. In such a case, a notification part of a CPM may indicate the inclusion rule or another reason to explain the non-inclusion of the perceived objects, as described by reference to Figure 5 and 6. For the sake of illustration, a reason may be one of the following:
- the reporting frequency rate is reduced,
- the object is static,
- the object belongs to a class having a low priority,
- there are too many objects to report,
- there is a system error, and
- there is a network error.

As illustrated in Figure 3b, after receiving a CPM comprising items of information directed to perceived objects and/or to perception regions and comprising a notification part informing of a change of the reporting policy for reporting a previously reported object and/or perception region (step 350), a receiving ITS-S, that may correspond, for example, to a vehicle or a pedestrian, may use the received CPM to update its local environment model. It is noted that several changes of reporting policy may be indicated within the same CPM.

Upon reception of such a CPM, the receiving ITS-S may update its environment model with the perceived object information, the perception region information, and the notification part informing of one or more changes of the reporting policy for reporting previously reported objects and/or perception regions (step 360). The notification part comprises additional estimated object information enabling the receiving ITS-S to anticipate hazardous situations, such as the sudden appearance of a pedestrian behind a bus, or to keep track of objects in their LDM while they are temporarily occluded.

### CPM structure

According to some embodiments of the disclosure, the structure of the CPMs is modified to comprise a notification part informing of changes of reporting policies for reporting previously reported objects and/or perception regions. The notification part may comprise estimated object information, such as an estimated position or more generally an estimated state, associated with a previously perceived object. This may occur when the object perception quality value does not make it possible anymore to report the object in a CPM as a perceived object.

### Structure of a standard collective perception message

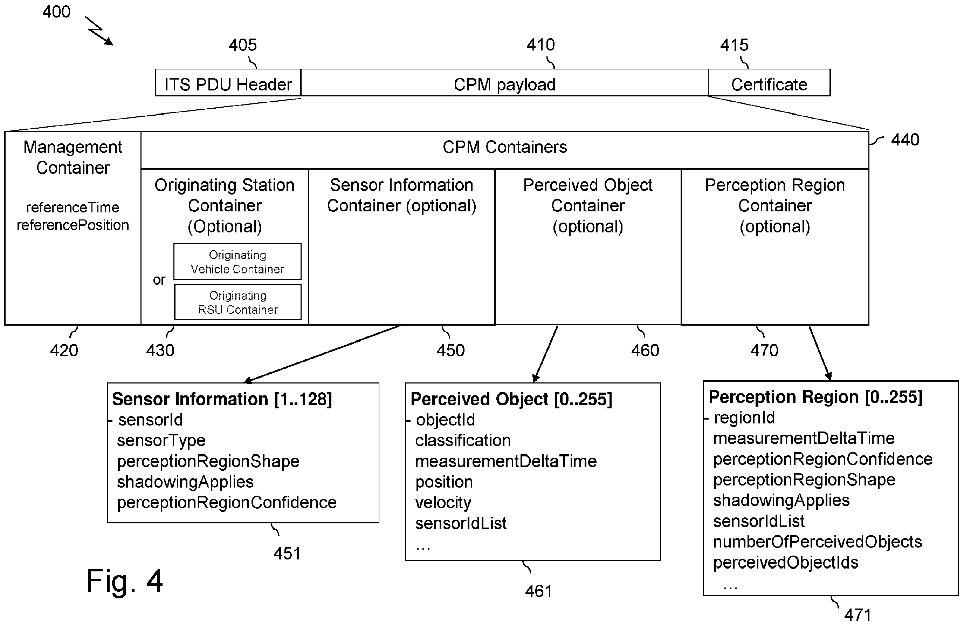

**Figure 4** illustrates an example of a structure of a collective perception message, CPM, according to the prior art.

The illustrated CPM structure, referenced 400, is based on ETSI TS 103 324 Specification (V0.0.53). It comprises an ITS PDU header referenced 405, a CPM payload 410, and a certificate 415.

ITS PDU header 405 may be a common header including information about the protocol version, a message type, and an ITS-S identifier (ID) of the originating ITS-S.

CPM payload 410 may contain a management container referenced 420 and CPM containers referenced 440 that may contain an originating station container referenced 430, a sensor information container referenced 450, a perceived object container referenced 460, and a perception region container referenced 470.

Each container includes some data elements (DE) and/or data frames (DF), also called components. ETSI TS 102 894-2 specification defines conventional data elements and data frames used in ITS messages.

Regardless of the type of the ITS-S generating the considered CPM, the management container provides information regarding the station type, the reference time (the absolute reference time of the message), and the reference position of the originating ITS station. The message can be transmitted either by an ITS station, such as a vehicle, or by a stationary RSU. In case of a CPM generated by a vehicle, the originating station container contains the dynamic information of the originating ITS station. It is not optional in case of a vehicle transmitting the CPM. In case of a CPM generated by an RSU, the originating station container may provide references to identification numbers provided by the MAP Message (CEN ISO/TS 19091) reported by the same RSU. These references are required in order to match data provided by the CPM to the geometry of an intersection or road segment as provided by the MAP message. It is not required that a RSU has to transmit a MAP message for matching objects to road geometries. In this case, the originating station container may be omitted. It is for this reason that the originating station container is set as optional.

The sensor information container 450, that is optional, contains the set of sensor information. It provides information about the sensory capabilities of an ITS station. Depending on the station type of the originating ITS station, different sensor information specifications are available to encode the properties of a sensor. The sensor information container is included in CPMs whenever the time elapsed since the last time a CPM included a *sensor information container* is equal or greater than *T_AddSensorInformation,* as defined in TS 103 324. Up to 128 sensor information may be used in a CPM. As illustrated, an information structure 451 associated with a sensor may include:
- *sensorId,* which is an identifier of the sensor,
- *sensorType,* which is the type of the sensor (various types of sensor may be defined such as radar, lidar, monovideo, stereovision, nightvision, ultrasonic, pmd, fusion, inductionloop, sphericalCamera, itssaggregation, or uwb),
- *perceptionRegionShape,* which represents the shape of the perception region of the sensor (e.g., the field of view of the camera sensor),
- *shadowingApplies,* to indicate the application of the shadowing mechanism within the given *perceptionRegionShape,* and
- *perceptionRegionConfidence,* which represents the confidence level for correctly detecting objects and unoccupied subregions present in the sensor perception region shape.

The optional perceived object container 460 contains a set of perceived objects 461. It is composed of a sequence of optional or mandatory data elements (DEs) and/or data frames (DFs) which give a detailed description of the dynamic state and properties of a detected (or perceived) object.

More precisely, each object is described using the dedicated *perceivedObject* data structure referenced 461. This structure contains data elements and/or data frames as defined by the ETSI TS 103 324 (V0.0.53) and comprises various fields including the following:
- *objectId,* which is a data element representing an identifier assigned to a perceived object. It remains constant as long as the object is perceived by the originating ITS-S,
- *measurementDeltaTime,* which is a data element corresponding to the time difference in milliseconds between the reference time provided in the management container 420 and the measurement time of the object by the sensor,
- the *position,* which indicates the position of the geometric center of the object's bounding box within the pre-defined coordinate system. It contain the x, y and z cartesian coordinates for the object with a confidence value of the position accuracy,
- the *velocity* (optional), which is a velocity vector in a polar or cartesian coordinate system., for the moment of measurement,
- the *acceleration* (optional) to represent the polar or cartesian acceleration components,
- the dimension (optional) defined by *objectDimensionX, objectDimensionY, obectDimensionZ,* which represents the dimension of the perceived object,
- *objectAge (optional),* which is the age of the perceived object,
- *obectPerceptionQuality,* which indicates the overall information quality of the perceived object. The computation of the object perception quality value may be based on a sensor's or merging system confidence, on the binary detection success (i.e. the detection success of the object during the last measurements), and on the object age,
- *sensorIdList* (optional), which is a list of identifiers of the sensors which provided the measurement data. It refers to *sensorId* in the sensor information container. If the sensor information container is never provided by the originating ITS-S, the list may be populated with random numbers, where each number is assigned to a sensor of the originating ITS-S,
- *mapPosition* (optional), which indicates the position of the perceived object mapped onto the intersection topology description transmitted in MAP messages, and,
- *classification* (optional), which provides the classification of the perceived object (such as Vulnerable Road User, vehicle, etc.). It may be composed of an object class and possibly a subclass (e.g., a vehicle class has subclasses passengerCar, bus, etc.) with a class confidence value. The *groupSubClass* allows an ITS-S transmitting CPMs to regroup items of information of multiple VRUs into a VRU Group. The information about the VRU group is then provided using a *vruClusterInformation* data structure that may contain the VRU group size, shape and VRU profiles present in the group, and a VRU cluster identifier indicated in a received VAM.

The perception region container 470, that is optional, contains the set of perception region information. It comprises a sequence of optional or mandatory data elements (DEs) which provide information about free spaces detected by a particular sensor. Each perception region (471) comprises various fields such as:
- *regionId,* which is a data element representing an identifier assigned to a perception region. It remains constant as long as the region is perceived by the originating ITS-S,
- *measurementDeltaTime,* which is a data element corresponding to the time difference for the provided measurement information with respect to the CPM reference time provided in the management container 420,
- *perceptionRegionConfidence* which represents the perception confidence level in the area defined by the *perceptionRegionShape,*
- *perceptionRegionShape,* which represents the geometry of the region,
- *shadowingApplies,* which is a Boolean indicator used to indicate whether a ray tracing approach should be used to compute a shadowed area behind an object,
- *numberOfPerceivedObjects (optional),* which is a value indicating the number of perceived objects in the region,
- *perceivedObectlds (optional),* which is a list of the identifiers (*objectId*) of perceived objects in the region, and
- *sensorIdList,* which is a list of identifiers of the sensors (*sensorId*) used to carry out the measurement to indicate the region.

### Notification message container

**Figure 5** illustrates an example of a structure of a collective perception message, CPM, extended with a notification message container according to some embodiments of the disclosure.

The illustrated CPM structure, referenced 500, is based on the ETSI TS 103 324 specification (V0.0.53). As illustrated, it comprises an ITS PDU header referenced 505, a CPM payload 510, and a certificate 515.

ITS PDU header 505 and certificate 515 are data structures that are similar to ITS PDU header 405 and certificate 415 in Figure 4, respectively.

As illustrated, CPM payload 510 contains a management container referenced 520 (similar to management container 420 in Figure 4) and CPM containers referenced 640 that may contain an originating station container referenced 530 (similar to originating station container 430 in Figure 4), a sensor information container referenced 550 (similar to sensor information containers 450 in Figure 4), a perceived object container referenced 560, a perception region container referenced 570 (similar to perception region containers 470 in Figure 4), and according to the embodiment illustrated in Figure 5, new (compared to known technics) notification container referenced 580.

Perceived object container 560 is optional and may contain a set of perceived objects defined by data structures such as data structure 561 storing information similar to the one of data structure 461 in Figure 4. Perception region container 570 is optional and may contain a set of perception regions defined by data structures such as data structure 571 storing information similar to the one of data structure 471 in Figure 4. According to the embodiment illustrated in Figure 5, information about an object or a perception region that is no longer included in the perceived object container or in the perception region container by an originating ITS-S may be included in notification container 580, in a notification message having a data structure such as data structure 581. It is used to inform receiving ITS-Ss of the change of the reporting policy, in view of previous CPMs including this object or perception region.

It is observed that a receiving ITS-S implementing an early version of CPM (for example according to TR 103 562 standard) would not be able to decode the notification container, and would not be confused by the notification container information as it is ignored. Such a receiving ITS-S may use items of information from the perceived object container 560 and/or the perception region container 570, containing all the items of information of the perceived objects and perception regions, with data measured from on-board sensors, as it would do with a CPM having the structure illustrated in Figure 4.

New notification container 580 is provided to store information about estimated objects, that may be described in data structure 581.

Data structure 581 may contain all or some of the following fields to provided information about previously reported objects or perception regions that should no longer be reported:
- *changeReportingPolicyMessage,* which is a value enabling identification of a notification message that is used to inform of a change of a reporting policy of one or more item (object or perception region), for example to inform that such an item is no longer reported in the CPM while it was previously perceived and tracked in perceived object data structure 561 or in perception region data structure 571. The *changeReportingPolicyMessage* can have some variations to indicate whether the Message is indicating that the listed objects within the message will be no longer reported or temporarily non-reported. The message name field can also be adapted to indicate a definitive end of inclusion in the next CPMs (for example: *'endOfInclusion*') or adapted to indicate a suspension in current reported CPM (for example: *'suspendedInclusion', 'pendingInclusion', etc*.),
- *container: object or region,* which is a value enabling determining whether the notification message concerns an object or a perception region in the corresponding container,
- *previousld: objectld or regionld,* which is the identifier of the perceived object or perception region that was previously perceived and tracked in perceived object data structure 561 or in perception region data structure 571,
- *reason,* which describes the reason why the ITS-S generating the CPM decides to change the reporting policy, for example to terminate reporting the concerned object or perception region. The reason field may indicate one or more of the following reasons due to various rules such as inclusion rules, perception issues, analysis rules, and system issues:
   ∘ 'object class is low priority to report according to other object class',
   ∘ 'too many objects',
   ∘ 'VRU perceived object is migrated into a VRU group object',
   ∘ 'perceived object is migrated into a perception region',
   ∘ 'perceived object is migrated into another perceived object due to sensor fusion',
   ∘ 'perception region is no longer defined',
   ∘ 'VRU group object is no longer defined',
   ∘ 'object/region is no longer perceived due to an occlusion by another object',
   ∘ 'object/region is no longer perceived due to an occlusion by a known element of the road topology',
   ∘ 'object/region is no longer perceived as it is outside of the road traffic',
   ∘ 'object/region is no longer perceived as it is outside of perception system',
   ∘ 'perception system error', and
   ∘ 'network congestion',

According to some embodiments, inclusion rules may be used as a part of a reporting policy to optimize the CPM reporting size, for example by modifying the frequency of reporting objects in CPMs. Such inclusion rules may be defined according to thresholds on speed, position, type of objects, etc. The reason field may indicate such inclusion rules, in particular if it is the cause why the object is no longer reported or temporarily not reported or why it is reported with a different frequency.

Still according to some embodiments, perception issues may also be indicated in the reason field to describe why the object is no longer reported or temporarily not reported or why it is reported with a different frequency. For example, a perception issue may be one or more of the following:
∘ 'object/region is no longer perceived due to an occlusion by another object',
∘ 'object/region is no longer perceived due to an occlusion by a known element of the road topology', and
∘ 'object/region is no longer perceived as it is outside of the road traffic'.

Still according to some embodiments, analysis rules may also be indicated in the reason field to describe why the object is no longer reported or temporarily not reported or why it is reported with a different frequency. Such analysis rules may be used as a part of a reporting policy to optimize the CPM reporting size, by reducing the number of reported objects in CPMs. For example, an analysis rule may be one of the following:
∘ 'too many objects',
∘ 'VRU perceived object is migrated into a VRU group object',
∘ 'perceived object is migrated into a perception region',
∘ 'perceived object is migrated into another perceived object due to sensor fusion',
∘ 'perception region is no longer defined', and
∘ 'VRU group object is no longer defined'.

Still according to some embodiments, system issues may also be indicated in the reason field to describe why the object is no longer reported or temporarily not reported. For example, the system issues can be:
∘ 'perception system error', and
∘ 'network congestion',
   - *warningIndication,* which may be used by the ITS-S generating the notification message to indicate to receiving ITS-S stations that the object or region that is no longer reported should still be kept in their LDMs because the reporting termination is due to a perception limitation reason, for example the concerned object may be still on the road. For the sake of illustration, the *warningIndication* can be active for the following *reason*:
      ∘ 'too many object',
      ∘ 'object/region is no longer perceived due to an occlusion by another object',
      ∘ 'object/region is no longer perceived due to an occlusion by a known element of the road topology',
      ∘ 'perception system error',
      ∘ 'network congestion'
   - *lastMeasurement,* which is a data structure containing a copy of the items of information reported in the last perceived object data structure 561 or in the last perception region data structure 571, as stored in the environment model (e.g., in environment model 220 in Figure 2), that are no longer included in the perceived object data structure 561 or in the last perception region data structure 571,
   - *newContainer: object or region,* which is a value to indicate the container where the object or region is migrated and now perceived as another object or region (e.g., in a case wherein changing the policy comprises reporting the object within a perception region after being reported individually or vice versa), and
   - *newld: obectId* or *regionId,* which is an identifier to indicate that the object or region is migrated and is now perceived as another object or region and to provide the identifier of the latter (in a case where an object should no longer be reported (definitive reporting stop) no newId is needed).

### Notification message fields in perceived object or region data structures

**Figure 6** illustrates an example of a structure of a collective perception message, CPM, extended with notification message fields in the perceived object data structure and/or in the perception region data structure, according to some embodiments of the present disclosure.

The illustrated CPM structure, referenced 600, is based on the ETSI TS 103 324 specification (V0.0.53). As illustrated, it comprises an ITS PDU header referenced 605, a CPM payload 610, and a certificate 615.

ITS PDU header 605 and certificate 615 are data structures that are similar to ITS PDU header 405 and certificate 415 in Figure 4, respectively.

As illustrated, CPM payload field 610 contains a management container referenced 620 (similar to management container 420 in Figure 4) and CPM containers referenced 640 that may contain an originating station container referenced 630 (similar to station data container 430 in Figure 4), a set of sensor information containers referenced 650 (similar to sensor information containers 450 in Figure 4), a set of perceived object containers referenced 660, and a set of perception region containers referenced 670.

Perceived object containers 660 are optional and may contain a set of perceived objects described by data structures such as data structure 661 storing items of information similar to those stored in data structure 461 in Figure 4. In addition, according to the embodiment illustrated in Figure 6, perceived object containers 660 may contain items of information about objects that are no longer perceived by on-board sensors of an originating ITS-S. These items of information may be stored in extended data structures such as data structure 662 indicating the non-inclusion or end of inclusion of the corresponding objects (similar to the notification message container in Figure 5). Data structure 661 may contain items of information from the last measurement when the corresponding object was previously perceived, but is no longer reported.

Likewise, perception region containers 670 are optional and may contain a set of perception regions described by data structures such as data structure 671 storing information similar to the one of data structure 471 in Figure 4. In addition, according to the embodiment illustrated in Figure 6, perception region containers 670 may contain items of information about perception regions that are no longer perceived by on-board sensors of an originating ITS-S. These items of information may be stored in extended data structures such as data structure 672 indicating the non-inclusion or end of inclusion of the corresponding perception regions (similar to the notification message container in Figure 5). Data structure 671 may contain items of information from the last measurement when the corresponding perception region was previously perceived, but is no longer reported.

### Example of use cases

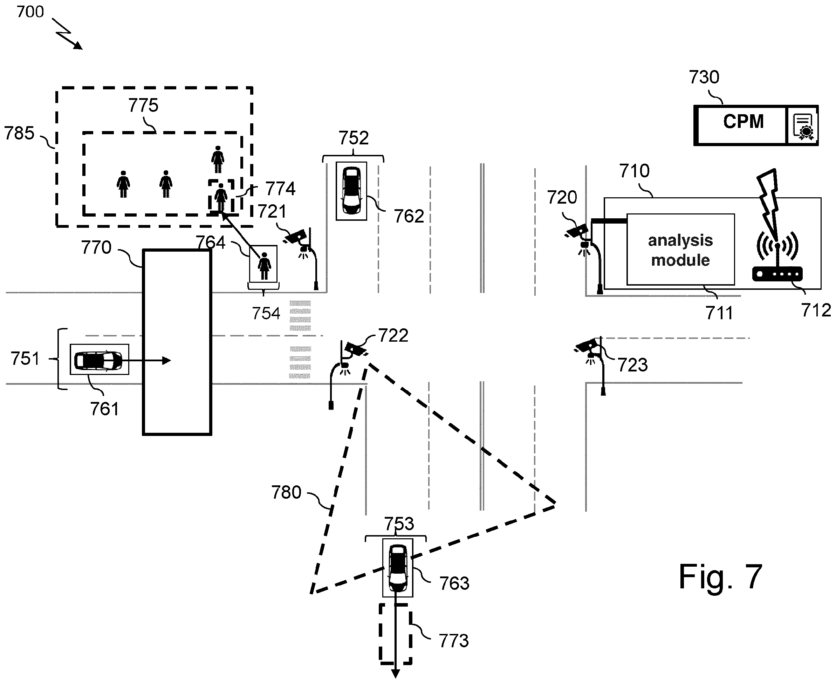

**Figure 7** illustrates a first example of use cases of some embodiments of the present disclosure, according to which an originating ITS-S performed some changes of the reporting policy of a perceived object in CPMs.

For the sake of clarity and conciseness, the intelligent transportation system illustrated in Figure 7, referenced 700, is the same or is similar to the one illustrated in Figure 1, with the main following differences:
- the presence of moving vehicle 751 to illustrate the non-inclusion in a CPM of an object occluded under a bridge,
- the presence of moving vehicle 753 to illustrate the non-inclusion of an object located at the limit of a perception area (here, at the limit of a detection area 780), and
- the presence of moving pedestrian 754 to illustrate the non-inclusion of an object due to its migration into a VRU group (VRU group 775) or within a perception region (perception region 785).

Like the example illustrated in Figure 1, an ITS station, that may generate and transmit CPMs such as CPM 730, is embedded within a road side unit, RSU, 710, that may have more processing resources to measure objects and regions and to determine occlusion due to the movements of vehicles or to road geometries (e.g., the bridge under which vehicle 751 is about to pass). For example, a RSU may have a wider field of view than an ITS-S embedded within a vehicle, multiple fields of view, fast access to other information such as traffic conditions, traffic light status, knowledge of objects that populate the monitored area, etc.

Like ITS 100, ITS 700 is implemented at an intersection and comprises fixed road side unit 710 and several entities that may carry or comprise ITS station (ITS-S) each, for transmitting and or receiving ITS messages within the ITS. The several entities may be for example, the vehicles 751, 752, and 753 and the pedestrian 754. Likewise, fixed road side unit 710 includes a set of sensors, such as image sensors, here video cameras 720, 721, 722, and 723 and analysis module 711 to analyze data provided by the sensors.

By monitoring the area under surveillance, analysis module 711 may perceive the following objects at a reference time denoted to:
- objects 761, 762, and 763, respectively corresponding to the vehicles 751, 752, and 753 on the roadway, and
- object 764 corresponding to pedestrian 754 on the sidewalk.

In the illustrated example, vehicle 751 is moving and is about to pass under a bridge that forms an occlusion area, denoted 770, for sensor 721 (i.e., sensor 721 cannot perceive the presence of entities in area 770). According to some embodiments, analysis module 711 determines using its estimation module (e.g., estimation module 240 in Figure 2) that vehicle 751 is in occlusion area 770 and is not able to determine its position at time t₁. Based on known technic, roadside ITS-S 712 of RSU 710 may generate the following items of information related to vehicle 751 and broadcast them to receiving ITS-Ss within successive CPMs.

| CPM | *Reference time* | *Perceived Object* |
|---|---|---|
| 1 | t₀ | *obectId: 1022* (illustrated as 751) |
| | | position: 761 |
| 2 | t₁ | *obectId: 1022* (illustrated as 751) |
| | | ChangeReportingPolicyMessage: "endOfInclusion" |
| | | reason: occlusion by road topology |
| | | warninglndication: Active |
| | | lastMeasurement: measured position 761 at time to |

Based on these items of information, receiving ITS-Ss may keep the vehicle 751 as an object in their LDM at position 761 since they receive a notification message that the vehicle is no longer perceived but still present.

In the illustrated example, pedestrian 754 is perceived as a VRU at time to at position 754. It is moving and is about to be perceived as part of VRU group 775 at time t₁ when reaching position 774. Accordingly, analysis module 711 can update its LDM by integrating VRU 754 as an element of VRU group 775 at time t₁ and removing it from its LDM as an independent element at time t₂.

According to some embodiments of this disclosure, roadside ITS-S 712 of RSU 710 generates the following items of information related to pedestrian 754 and broadcast them to receiving ITS-Ss within successive CPMs:

| CPM | *Reference time* | *Perceived Object* |
|---|---|---|
| 1 | t₀ | Objectld: 101 (illustrated as 775) |
| | | Classification: VRU group (referenced 775) |
| | | area: geometry of 775 |
| | | Objectld: 102 (illustrated as 754) |
| | | Classification: VRU (referenced 754) |
| | | measured position 764 |
| 2 | t₁ | Objectld: 101 (illustrated as 775) |
| | | VRU group (referenced 775) |
| | | area: geometry of 775 |
| | | Objectld: 102 (illustrated as 754) |
| | | ChangeReportingPocilyMessage |
| | | reason: migration in VRU group |
| | | lastMeasurement: measured position 764 at time to |
| | | newld: 101 |
| 3 | t₂ | Objectld: 101 (illustrated as 775) |
| | | VRU group (referenced 775) |
| | | area: geometry of 775 |

Based on these items of information, receiving ITS-Ss may remove pedestrian 754 from their LDM without ambiguity as it is still perceived but reported over CPMs using different means (VRU group instead of an independent VRU).

Alternatively, pedestrian 754 is perceived as a VRU at time t₀ at position 754. It is moving and is about to be perceived as a part of a perception region 785 at time t₁ when reaching the position 774. Accordingly, analysis module 711 can update its LDM by integrating VRU 754 as an element of perception region 775 at time t₁ and removing it from its LDM as an independent element at time t₂.

According to some embodiments of this disclosure, roadside ITS-S 712 of RSU 710 generates the following items of information related to pedestrian 754 and broadcast them to receiving ITS-Ss within successive CPMs:

| CPM | *Reference time* | *Perceived Object* | *Perception Region* |
|---|---|---|---|
| 1 | t₀ | Objectld: 102 (illustrated as 754) | RegionId: 201 (illustrated as 785) |
| | | VRU (referenced 754) | |
| | | measured position 764 | NumberOfObjects = 3 |
| | | | area : geometry of 775 |

| | | | |
|---|---|---|---|
| 2 | t₁ | Objectld: 102 (illustrated as 754) | Regionld: 201 (illustrated as 785) |
| | | ChangeReportingPocilyMessage reason: migration in perception region | |
| | | | NumberOfObjects = 4 |
| | | | area : geometry of 775 |
| | | lastMeasurement: measured position 764 at time to | |
| | | newContainer: Perception Region | |
| | | newld: 201 | |
| 3 | t₂ | | Regionld: 201 (illustrated as 785) |
| | | | NumberOfObjects = 4 |
| | | | area : geometry of 775 |

Based on these items of information, receiving ITS-Ss may remove pedestrian 754 from their LDM without ambiguity as it is still perceived but reported over CPMs using different means (perception region instead of an independent VRU).

Still for the sake of illustration, vehicle 753 is leaving detection area 780. At time t₀, it is perceived at position 763 by sensor 722. At time t₁, vehicle 753 is at position 773 and it is considered outside of the perception region 780 by analysis module 811. Using such information, roadside ITS-S 712 of RSU 710 may, according to some embodiments of the disclosure, transmit the following items of information related to vehicle 753 within successive CPMs:

| CPM | *Reference time* | *Perceived Object* |
|---|---|---|
| 1 | t₀ | ObjectId: 1023 (illustrated as 753) |
| | | Vehicle |
| | | measured position 763 |
| 2 | t₁ | Objectld: 1023 (illustrated as 753) |
| | | Vehicle |
| | | ChangeReportingPocilyMessage |
| | | reason: 'object/region is no longer perceived as it is outside of perception system' |

Based on these items of information, receiving ITS-Ss may update their LDM considering that vehicle 753 has left the perception area of sensor 722.

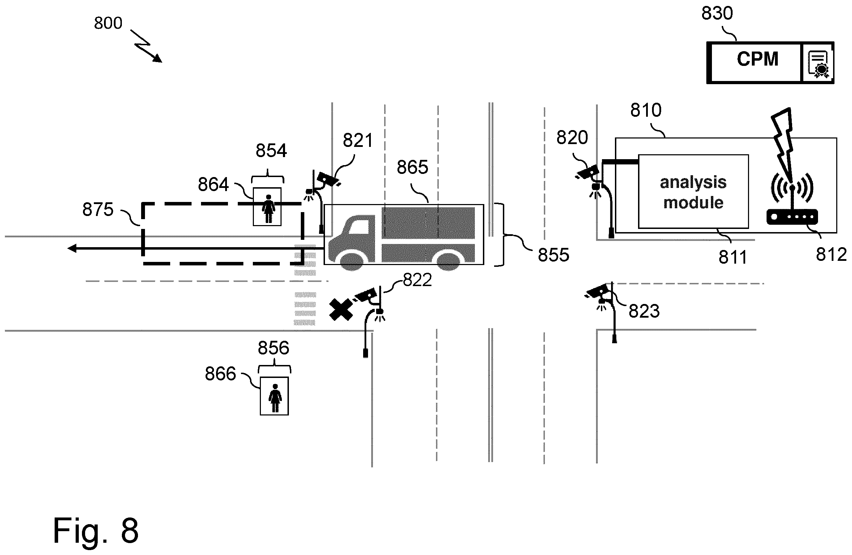

**Figure 8** illustrates a second example of a use case of some embodiments of the present disclosure, according to which an originating ITS-S performed some changes of the reporting policy of a perceived object in CPMs.

For the sake of clarity and conciseness, the intelligent transportation system illustrated in Figure 8, referenced 800, is the same or is similar to the one illustrated in Figure 1, with the main following differences:
- the presence on the roadway of a moving truck referenced 855 that at some point masks pedestrian 854 located on the sidewalk and
- the presence of a pedestrian 856 at position 866, located within the perception area of sensor 822 which is deficient.

Like the example illustrated in Figure 1, an ITS station, that may generate and transmit CPMs such as CPM 830, is embedded within a road side unit, RSU, 810, that may have resources to measure objects and regions and determine occlusion in the perception of objects such as a pedestrian hidden by a truck. For example, an RSU may have a wider field of view than an ITS-S embedded within a vehicle, multiple fields of view, fast access to other information such as traffic conditions, traffic light status, knowledge of objects that populate the monitored area, etc.

Like ITS 100, ITS 800 is implemented at an intersection and comprises a stationary road side unit 810 and several entities that may carry or comprise ITS station (ITS-S) each, for transmitting and or receiving ITS messages within the ITS. The several entities may be for example the pedestrian 854 and the truck 855. Likewise, fixed road side unit 810 includes a set of sensors, such as image sensors, here video cameras 820, 821, 822, and 823 and analysis module 811 to analyze data provided by the sensors.

By monitoring the area under surveillance, analysis module 811 may perceive the following objects at a reference time denoted to:
- object 864 corresponding to pedestrian 854 on the sidewalk, and
- object 865 corresponding to truck 855 on the roadway.

In the illustrated example, truck 855 is moving from its current position at time t₀ to the position represented with reference 875, as perceived by analysis module 811 at time t₁. Accordingly, at time t₁, the truck masks pedestrian 854 and so, analysis module 811 is no longer able to perceive (with its sensors) object 864 that was perceived at time t₀. However, according to some embodiments of the disclosure, analysis module 811 is able to determine that the pedestrian is hidden behind the truck and may inform receiving ITS-Ss of this situation by sending a notification message comprising an indication of the reason of the non-inclusion of pedestrian 854 as an object in CPMs.

At time t₁, analysis module 811 is able to determine that pedestrian 854 is present behind truck 855 and is aware that its latest know position is 864 on the sidewalk, at time to. According to some embodiment of the disclosure, a corresponding notification message is transmitted by RSU 810 in a next generated CPM. For the sake of illustration, roadside ITS-S 812 of RSU 810 may include the following items of information related to the monitored area in successive CPMs:

| CPM | *Reference time* | Perceived Object |
|---|---|---|
| 1 | t₀ | Objectld: 2055 (illustrated as 855) |
| | | Classification: Truck |
| | | measured position 865 |
| | | Objectld: 2056 (illustrated as 854) |
| | | Classification: Pedestrian |
| | | measured position 864 |
| 2 | t₁ | Objectld: 2055 (illustrated as 855) |
| | | Classification: Truck |
| | | measured position 875 |
| | | Objectld: 2056 (illustrated as 854) |
| | | Classification: Pedestrian |
| | | changeReportingPolicyMessage |
| | | last measured position 864 |
| | | reason: 'object/region is no longer perceived due to an occlusion by another object' |
| | | warningIndication |

Accordingly, an ITS-S entering into the vicinity of RSU 810 and receiving a CPM with reference time t₁ is warned of the presence of pedestrian 854 previously perceived at position 864 (also indicated by the inclusion of the warningIndication filed). In particular, as there is a crosswalk near this area, it alerts approaching vehicles that there is a probability that a pedestrian can cross the road behind the truck.

As another example, by monitoring the area under surveillance, analysis module 811 may perceive pedestrian 856 at position 866 at a reference time t₀ but due a perception failure of sensor 822, pedestrian 856 is no longer perceived at time t₁ and thus, its position is unknown.

Analysis module 811 is able to determine that pedestrian 856 is not updated in its LDM due to a perception failure and keep track of its last position. As a consequence, roadside ITS-S 812 of RSU 810 may include the following items of information related to the loss of perception in successive CPMs:

| CPM | *Reference time* | Perceived Object |
|---|---|---|
| 1 | t₀ | ObjectID: 2057 (illustrated as 856) |
| | | Classification: VRU |
| | | measured position 856 |
| 2 | t₁ | ObjectID: 2057 (illustrated as 856) |
| | | classification: VRU |
| | | changeReportingPolicyMessage |
| | | last measured position 856 |
| | | reason: 'system error' |
| | | warningIndication |

Accordingly, an ITS-S entering into the vicinity of RSU 810 and receiving a CPM with reference time t₁ is warned of the presence of pedestrian 856 previously measured at position 856. In particular, as there is a crosswalk near this area, it alerts approaching vehicles that there is a probability that a pedestrian can cross the road.

### Example of a hardware to carry out steps of the method of embodiments of the present disclosure

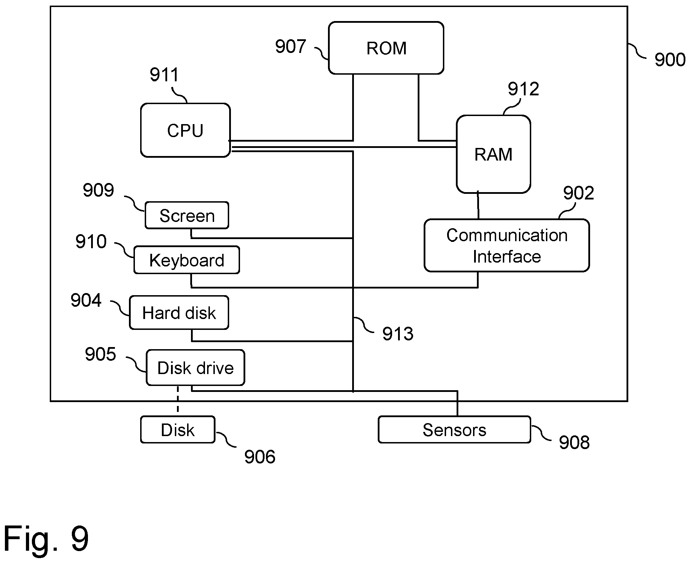

**Figure 9** is a schematic representation of an example of a communication ITS-S device configured to implement some embodiments of the present disclosure. It may be either an ITS-S embedded in a vehicle or in a road side unit, for example road side unit 110 in Figure 1.

The communication device 900 may preferably be a device such as a microcomputer, a workstation or a light portable device embedded in a vehicle or a RSU. The communication device 900 comprises a communication bus 913 to which there are preferably connected:
- a central processing unit 911, such as a microprocessor, denoted CPU or a GPU (for graphical processing unit);
- a read-only memory 907, denoted ROM, for storing computer programs for implementing some embodiments of the disclosure;
- a random access memory 912, denoted RAM, for storing the executable code of methods according to embodiments of the disclosure as well as the registers adapted to record variables and parameters necessary for implementing methods according to embodiments of the disclosure; and
- at least one communication interface 902 connected to the radio communication network over which ITS messages are transmitted. The ITS messages are written from a FIFO sending memory in RAM 912 to the network interface for transmission or are read from the network interface for reception and writing into a FIFO receiving memory in RAM 912 under the control of a software application running in the CPU 911.

Optionally, the communication device 900 may also include the following components:
- a data storage means 904 such as a hard disk, for storing computer programs for implementing methods according to one or more embodiments of the disclosure;
- a disk drive 905 for a disk 906, the disk drive being adapted to read data from the disk 906 or to write data onto said disk;
- a screen 909 for serving as a graphical interface with the user, by means of a keyboard 99 or any other pointing means.

The communication device 900 may be optionally connected to various peripherals including perception sensors 908, such as for example a digital camera, each being connected to an input/output card (not shown) so as to supply data to the communication device 900.

Preferably the communication bus provides communication and interoperability between the various elements included in the communication device 900 or connected to it. The representation of the bus is not limiting and in particular the central processing unit is operable to communicate instructions to any element of the communication device 900 directly or by means of another element of the communication device 900.

The disk 906 may optionally be replaced by any information medium such as for example a compact disk (CD-ROM), rewritable or not, a ZIP disk, a USB key or a memory card and, in general terms, by an information storage means that can be read by a microcomputer or by a microprocessor, integrated or not into the apparatus, possibly removable and adapted to store one or more programs whose execution enables a method according to the disclosure to be implemented.

The executable code may optionally be stored either in read-only memory 907, on the hard disk 904 or on a removable digital medium such as for example a disk 906 as described previously. According to an optional variant, the executable code of the programs can be received by means of the communication network, via the interface 902, in order to be stored in one of the storage means of the communication device 900, such as the hard disk 904, before being executed.

The central processing unit 911 is preferably adapted to control and direct the execution of the instructions or portions of software code of the program or programs according to the disclosure, which instructions are stored in one of the aforementioned storage means. On powering up, the program or programs that are stored in a nonvolatile memory, for example on the hard disk 904 or in the read-only memory 907, are transferred into the random access memory 912, which then contains the executable code of the program or programs, as well as registers for storing the variables and parameters necessary for implementing the disclosure.

In a preferred embodiment, the apparatus is a programmable apparatus which uses software to implement the disclosure. However, alternatively, the present disclosure may be implemented in hardware (for example, in the form of an Application Specific Integrated Circuit or ASIC).

Although the present disclosure has been described herein above with reference to specific embodiments, the present disclosure is not limited to the specific embodiments, and modifications will be apparent to a skilled person in the art which lie within the scope of the present disclosure.

Many further modifications and variations will suggest themselves to those versed in the art upon referring to the foregoing illustrative embodiments, which are given by way of example only and which are not intended to limit the scope of the disclosure, that being determined solely by the appended claims. In particular, the different features from different embodiments may be interchanged, where appropriate.

Each of the embodiments of the disclosure described above can be implemented solely or as a combination of a plurality of the embodiments. Also, features from different embodiments can be combined where necessary or where the combination of elements or features from individual embodiments in a single embodiment is beneficial.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

## Claims

1. A method of communication in an intelligent transport system, ITS, the method comprising, at an ITS station, ITS-S:
identifying a change of a reporting policy of a previously reported object, or of a previously reported perception region, objects or perception regions to be reported being reported in collective perception messages, CPMs, and
transmitting a CPM comprising at least one item of information to indicate the identified change of the reporting policy.

2. The method of claim 1, wherein the identified change of the reporting policy is a change of a reporting policy of a previously reported object, and wherein the change of the reporting policy results from reporting the previously reported object within a group of perceived objects in a corresponding container, after being previously reported as an individual object in a corresponding container.

3. The method of claim 1, wherein the identified change of the reporting policy is a change of a reporting policy of a previously reported object, and wherein the change of the reporting policy results from reporting the previously reported object as an individual object in a corresponding container, after being previously reported within a group of perceived objects in a corresponding container.

4. The method of claim 2 or claim 3, wherein the at least one item of information further comprises a reference to the group of perceived objects.

5. The method of any one of claims 2 to 4, wherein the container corresponding to the group of perceived objects is a perceived object container or a perception region container.

6. The method of any one of claims 2 to 5, further comprising applying at least one analysis rule for analyzing perceived objects and for determining whether a perceived object is to be reported as an individual perceived object or within a group of perceived objects, a change of a reporting policy of a previously reported object being identified as a function of the at least one analysis rule.

7. The method of claim 6, wherein the at least one item of information further comprises an indication of the at least one analysis rule.

8. The method of claim 1, wherein the change of the reporting policy results from changing the frequency of reporting the previously reported object or the previously reported perception region in consecutive CPMs to a new frequency of reporting, after being previously reported according to a previous frequency of reporting different from the new frequency of reporting, the at least one item of information further comprising the new frequency of reporting.

9. The method of claim 1, wherein the change of the reporting policy results from stopping reporting the previously reported object or the previously reported perception region in CPMs.

10. The method of any one of claims 1 to 9, wherein the at least one item of information further comprises a relative or an absolute time at which or after which the change of the reporting policy is effective.

11. The method of any one of claims 1 to 10, wherein the at least one item of information further comprises a warning indicator to indicate whether the change of the reporting policy is intentional or unexpected.

12. The method of any one of claims 1 to 11, wherein the at least one item of information is included in a container individually describing a perceived object or a perception region.

13. The method of any one of claims 1 to 11, wherein the at least one item of information is included in a dedicated container in the CPM, the dedicated container being different from a perceived object container and from a perception region container.

14. The method of any one of claims 1 to 13, wherein the identified change of the reporting policy is a change of a reporting policy of a previously reported object, the method further comprising applying at least one inclusion rule for identifying perceived objects to be reported in a CPMs, the change of the reporting policy being identified as a function of the at least one inclusion rule.

15. The method of claim 14, wherein the at least one item of information further comprises an indication of the at least one inclusion rule.

16. The method of any one of claims 1 to 15, further comprising applying at least one perception rule for determining a safety indication associated with a perceived object, the change of the reporting policy being identified as a function of the at least one perception rule.

17. The method of claim 16, wherein the at least one item of information further comprises an indication of the at least one perception rule.

18. The method of any one of claims 1 to 17, wherein the identified change of the reporting policy is a change of a reporting policy of a previously reported object and wherein the previously reported object is no longer perceived.

19. A method of communication in an intelligent transport system, ITS, the method comprising, at an ITS station, ITS-S:
receiving a collective perception message, CPM, comprising at least one item of information indicating a change of a reporting policy of an object or a perception region reported in a previous CPM and
updating an environment model of the ITS-S as a function of the at least one item of information.

20. The method of claim 19, wherein the at least one item of information is obtained from a container of the received CPM, the container individually describing a perceived object or a perception region.

21. The method of claim 19, wherein the at least one item of information is obtained from a dedicated container of the received CPM, the dedicated container being different from a perceived object container and from a perception region container.

22. A computer program product for a programmable apparatus, the computer program product comprising a sequence of instructions for implementing each of the steps of the method according to any one of claims 1 to 21 when loaded into and executed by the programmable apparatus.

23. A non-transitory computer-readable storage medium storing instructions of a computer program for implementing each of the steps of the method according to any one of claims 1 to 21.

24. An Intelligent Transport System, ITS, station, ITS-S, comprising a processing unit configured for carrying out each of the steps of the method according to any one of claims 1 to 21.
